# EUROPÄISCHE PATENTANMELDUNG

(11) **EP 1 820 873 A1**
(43) Veröffentlichungstag der Anmeldung: **22.08.2007**
(21) Anmeldenummer: 06000916.4
(22) Anmeldetag: 17.01.2006
(51) Int. Cl.: C23C 4/00, C23C 4/10, C23C 4/12, F01D 5/28

(54) **Verfahren zur Herstellung von Turbinenbauteilen**

(71) Anmelder: SIEMENS AKTIENGESELLSCHAFT, 80333 München (DE)
(72) Erfinder: Kaya, Bülent, 12047 Berlin (DE); Ladru, Francis-Jurjen, Dr., 14050 Berlin (DE); Mensing, Marcus, 13465 Berlin (DE); Wanigasinghe, Mahinda, Turnpike 10940 Middleton NY (US)

(57) **Zusammenfassung**

Die Erfindung betrifft ein Verfahren zur Herstellung von Turbinenbauteilen (1) mit wenigstens einem Umströmungskörper (4), z.B. einem Schaufelblatt, das im Bereich seiner Abströmkante (8) angeordnete Kühlluftaustrittsöffnungen (14) aufweist, wobei der Umströmungskörper (4) mit einer insbesondere keramischen Beschichtung durch Sprühbeschichten versehen wird. Erfindungsgemäß werden die Kühlluftaustrittöffnungen (14) vor dem Aufbringen der Beschichtung mit einer Abdeckleiste (15) vollständig abgedeckt, die aus einem Material besteht, das beim Beschichtungsvorgang beständig ist.

## Beschreibung

Die Erfindung betrifft ein Verfahren zur Herstellung von Turbinenbauteilen mit wenigstens einem Umströmungskörper, z.B. einem Schaufelblatt, der im Bereich seiner Abströmkante eine Reihe von nebeneinander angeordneten Kühlluftaustrittsöffnungen aufweist, wobei der Umströmungskörper mit einer insbesondere keramischen Beschichtung durch ein Sprühbeschichtungsverfahren versehen wird.

Vor allem in Gasturbinen kommen Turbinenbauteile zum Einsatz, die einen oder mehrere, dem Gasstrom ausgesetzte Umströmungskörper aufweisen. Solche Umströmungskörper sind insbesondere die Schaufelblätter von Turbinenschaufeln, die als Lauf- oder Leitschaufel ausgebildet sein können. Bei einem Ringsegment weist das Turbinenbauteil mehrere, beabstandete Leitschaufeln auf.

Sofern die Gasturbine bei hohen Temperaturen betrieben wird, werden die Turbinenschaufeln luftgekühlt. Hierzu wird Kühlluft über den Schaufelfuß der Turbinenschaufel in deren Hohlräume eingeleitet. Die Kühlluft tritt dann über Kühlluftaustrittsöffnungen aus. Eine Vielzahl solcher Kühlluftaustrittsöffnungen befinden sich auf der Druckseite des Schaufelblatts unmittelbar benachbart deren Abströmkante. Sie sind dort nebeneinander in einer Reihe angeordnet.
Beispiele für solche Turbinenschaufeln finden sich in der EP 1 015 736 B1, EP 1 471 210, DE 692 10 892 T1, DE 36 42 789 A1 und DE 69420 582 T2. Die dortigen Kühlluftaustrittsöffnungen dienen dazu, die spitz auslaufende Abströmkante zu kühlen.

Zur Verbesserung der Temperatur- und/oder Abrasionsfestigkeit werden die Schaufelblätter zusätzlich mit einer Beschichtung aus geeigneten Metallen, Metalllegierungen oder Keramiken versehen. Damit der Wärmeübergang von dem Schaufelblatt auf die Kühlluft im Bereich der abströmkantenseitigen Kühlluftaustrittsöffnungen nicht behindert wird, ist es erforderlich, dass die dortigen Kühlluftaustrittsöffnungen während des Beschichtungsvorgangs von Beschichtungsmaterial freigehalten werden. Sofern die Beschichtung mit EB-PVD (electrobeam-physical-vapor-deposition) erfolgt, kann dies durch entsprechende Steuerung der Vorrichtung ohne besondere weitere Maßnahmen geschehen. Dies ist jedoch nicht möglich, wenn die Beschichtung mittels eines Sprühbeschichtungsverfahrens aufgetragen wird. Beispiele für Sprühbeschichtungsverfahren sind das atmosphärische Plasmasprühen (APS) und das Hochgeschwindigkeitsflammspritzen (HVOF) (vgl. Ullmann's Encyclopedia of Industrial Chemistry, 2003, Band 21, S. 573 und 575).

Der Erfindung liegt somit die Aufgabe zugrunde, ein Verfahren zur Herstellung von insbesondere Turbinenschaufeln mit Kühlluftaustrittsöffnungen im Bereich der Abströmkante bereitzustellen, mit dem einerseits eine Beschichtung der Kühlluftaustrittsöffnungen vermieden wird, andererseits jedoch eine Beschichtung bis nah an die Kühlluftaustrittsöffnungen möglich ist.

Diese Aufgabe wird erfindungsgemäß dadurch gelöst, dass die Kühlluftaustrittsöffnungen vor dem Aufbringen der Beschichtung mit einer Abdeckleiste abgedeckt werden, die aus einem Material besteht, das bei der Sprühbeschichtung beständig ist. Als Material für die Abdeckleiste eignen sich Metalle, insbesondere Stahl.

Grundgedanke der Erfindung ist es, die abströmkantenseitigen Kühlluftaustrittsöffnungen beim Aufbringen der Beschichtung mit einer aufgesetzten Abdeckleiste vor dem Eindringen von Beschichtungsmaterial zu schützen. Dabei kann die Abdeckleiste an den jeweiligen Umströmungskörper so angepasst werden, dass die Abdeckung des Umströmungskörpers über die Kühlluftaustrittsöffnung hinaus minimal gehalten werden kann, d.h. sie kann auf 2 bis 3 mm begrenzt werden. Auf diese Weise ist der Umströmungskörper durch die Beschichtung weitestgehend geschützt, ohne dass die Gefahr besteht, dass Beschichtungsmaterial in wesentlichem Umfang in die Kühlluftaustrittsöffnungen eintritt und sich dort absetzt.

In Ausbildung der Erfindung ist vorgesehen, dass eine Abdeckleiste verwendet wird, die in die Kühlluftaustrittsöffnungen passende Vorsprünge aufweist, und dass die Abdeckleiste unter Einstecken der Vorsprünge in die Kühlluftaustrittsöffnungen auf den Umströmungskörper aufgesteckt wird. Dabei sollten die Vorsprünge von Hand plastisch biegsam sein, damit die Vorsprünge an die jeweilige Formgebung der Kühlluftaustrittsöffnungen und der sich anschließenden Kühlluftkanäle angepasst werden können. Auch die Abdeckleiste selbst sollte eine so geringe Wandstärke haben, dass sie an die Formgebung des Umströmungskörpers im Bereich der Abströmkante durch Biegen oder auch Beschneiden angepasst werden kann.

Das erfindungsgemäße Verfahren kann dadurch weitergebildet werden, dass der Umströmungskörper während der Sprühbeschichtung derart mit einem Gas, insbesondere Druckluft, beaufschlagt wird, dass das Gas aus den Kühlluftaustrittsöffnungen ausströmt. Auf diese Weise wird verhindert, dass Beschichtungsmaterial in eventuell vorhandenen Spalten zwischen der Oberfläche des Umströmungskörpers und der Abdeckleiste eindringt und sich in den Kühlluftaustrittsöffnungen niederschlägt.

Eine ähnliche Wirkung kann dadurch erreicht werden, dass die Kühlluftaustrittsöffnungen vor der Anbringung der Abdeckleiste vollständig mit einem Klebeband abgedeckt werden. Damit das Klebeband vor der Hitzeeinwirkung durch die Sprühbeschichtung geschützt wird, sollte eine Abdeckleiste verwendet werden, die das Klebeband nach dem Aufsetzen der Abdeckleiste vollständig abdeckt. Die Vorsprünge an der Abdeckleiste sollten dann so beschaffen sein, dass sie das Klebeband beim Aufstecken durchstechen. Dies kann dadurch erleichtert werden, dass in das Klebeband an den Stellen, an denen es von den Vorsprüngen durchstochen werden soll, mit Einschnitten versehen wird.

Sollte trotz des Vorsehens der Abdeckleiste, gegebenenfalls in Kombination mit einem Klebeband, Beschichtungsmaterial - auch "Overspray" genannt - in die Kühlluftaustrittsöffnungen eingedrungen sein, kann das Beschichtungsmaterial mittels feinem Sandstrahlen ("Pencil-Blasting") aus den Kühlluftaustrittsöffnungen entfernt werden. Um eine Beschädigung der Beschichtung außerhalb der Kühlluftaustrittsöffnungen zu vermeiden, sollte die Beschichtung während dieses Vorgangs in einem an die Kühlluftaustrittsöffnungen angrenzenden Bereich beispielsweise mittels eines Klebebandes abgedeckt werden.

In der Zeichnung ist die Erfindung anhand eines Ausführungsbeispiels näher veranschaulicht.

Es zeigen:

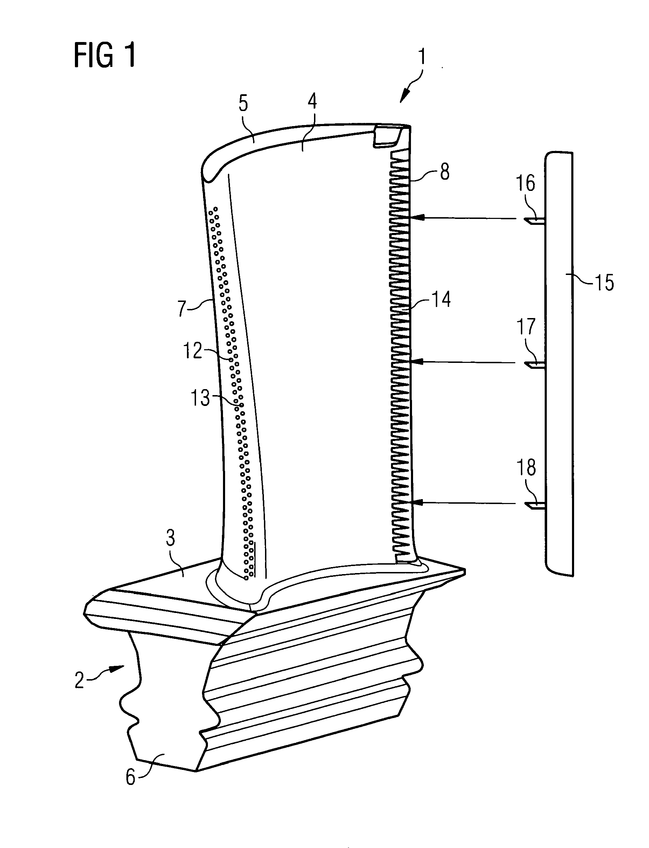

- Figur 1: eine perspektivische Ansicht einer Laufschaufel einer Strömungsmaschine mit Abdeckleiste und
- Figur 2: einen Querschnitt durch die Laufschaufel gemäß Figur 1 mit Abdeckleiste.

Die in den Figuren dargestellte Laufschaufel 1 ist für eine Strömungsmaschine bestimmt, die eine Gasturbine eines Flugzeuges oder eines Kraftwerks zur Elektrizitätserzeugung, aber auch eine Dampfturbine oder ein Kompressor sein kann. Die Laufschaufel 1 weist aufeinander folgend einen Befestigungsbereich 2, eine daran angrenzende Schaufelplattform 3, ein Schaufelblatt 4 und eine Schaufelspitze 5 auf. Im Befestigungsbereich 2 ist ein Schaufelfuß 6 ausgebildet, der zur Befestigung der Laufschaufel 1 an einer Welle oder einer Scheibe dient (nicht dargestellt). Der Schaufelfuß 6 ist als Tannenbaumfuß ausgebildet, kann aber beispielsweise auch als Hammerkopf oder Schwalbenschwanzfuß gestaltet sein. Die Laufschaufel 1 weist für ein Medium, das an dem Schaufelblatt 4 vorbeiströmt, eine Anströmkante 7 und eine Abströmkante 8 auf.

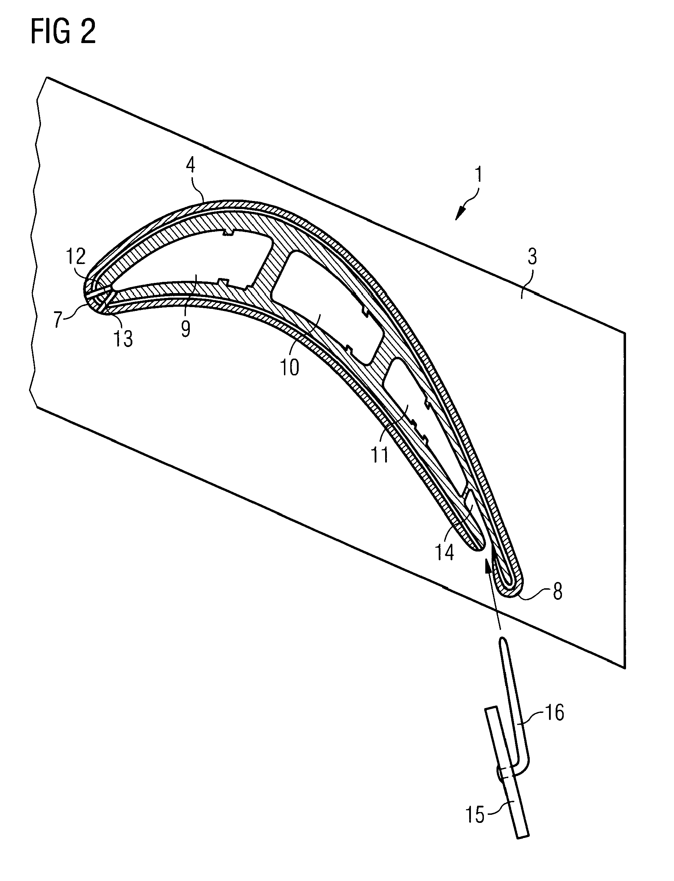

Wie insbesondere aus Figur 2 zu ersehen ist, ist das Schaufelblatt 4 hohl ausgebildet, wobei die so gebildeten Hohlräume 9, 10, 11 über den Schaufelfuß 6 mit Kühlluft beaufschlagt werden können. Die Kühlluft tritt an der Anströmkante 7 über eine Vielzahl von paarweise angeordneten Kühlluftaustrittsöffnungen 12, 13 aus, um in diesem Bereich eine als Isolierschicht wirkende Luftschicht zu erzeugen. Auch im Bereich der Abströmkante 8 sind eine Vielzahl von Kühlluftaustrittsöffnungen - beispielhaft mit 14 bezeichnet - vorgesehen, die auf der Druckseite des Schaufelblatts 4 angeordnet und so ausgebildet sind, dass die dort austretende Kühlluft tangential in Richtung auf die Abströmkante 8 austritt und somit die Kühlluftaustrittsöffnungen 14 taschenformartig ausgebildet sind.

Für die Laufschaufel 1 wird für alle Teile ein massiver metallischer Werkstoff, insbesondere eine Superlegierung, verwendet. Solche Superlegierungen sind beispielsweise aus der EP 1 204 776 B1, EP 1 306 454, EP 1 319 729 A1, WO 99/67435 oder WO 00/44949 bekannt. Die Laufschaufel 1 kann hierbei durch ein Gussverfahren, auch mittels gerichteter Erstarrung durch ein Schmiedeverfahren, durch ein Fräsverfahren oder Kombinationen daraus gefertigt sein. Die Laufschaufel 1 ist dazu bestimmt, auf dem Schaufelblatt 4 mit einer Beschichtung versehen zu werden, die auch mehrschichtig ausgebildet sein kann. Eine Beschichtung gegen Korrosion oder Oxidation kann nach der Formel MCrAlX zusammengesetzt sein, wobei M zumindest ein Element der Gruppe Eisen (Fe), Kobalt (Co) und Nickel (Ni) und X ein Aktivelement ist und für Yttrium (Y) und/oder Silizium und/oder zumindest ein Element der Seltenen Erden bzw. Hafnium (Hf) steht. Solche Legierungen sind aus der EP 0 486 489 B1, EP 0 786, 017 B1, EP 0 412 397 B1 oder EP 1 306 454 A1 bekannt, die bezüglich der chemischen Zusammensetzung der Legierung Teil dieser Offenbarung sein sollen.

Auf der MCrAlX-Schicht kann noch eine Wärmedämmschicht vorgesehen werden. Sie besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Bei dem erfindungsgemäßen Verfahren wird die Wärmedämmschicht durch atmosphärisches Plasmaspritzen (APS) oder durch das Hochgeschwindigkeitsflammspritzen (HVOF) aufgebracht.

Um die Wirksamkeit des Kühlluftaustritts an den abströmkantenseitigen Kühlluftaustrittsöffnungen 14 nicht zu behindern, muss vermieden werden, dass bei der Sprühbeschichtung mittels der vorgenannten Verfahren Beschichtungsmaterial in die Kühlluftaustrittsöffnungen 14 gelangt. Hierzu ist eine Abdeckleiste 15 aus einem Metallblech vorgesehen, die so lang ausgebildet ist, dass sie sich über sämtliche Kühlluftaustrittsöffnungen 14 erstreckt. Ihre Breite ist so bemessen, dass sie die Kühlluftaustrittsöffnungen 14 vollständig abdeckt, wobei die Abdeckleiste 15 an beiden Längsseiten 2 bis 3 mm breiter ist, um ein Eindringen von Beschichtungsmaterial zuverlässig zu verhindern, andererseits jedoch die Beschichtung bis nahe an die Kühlluftaustrittsöffnungen 14 heranreichen zu lassen.

Die Abdeckleiste 15 weist auf einer Seite Haltedorne 16, 17, 18 auf, die so bemessen und beabstandet sind, dass sie jeweils in eine Kühlluftaustrittsöffnung 14 eingesteckt werden können. Für das Befestigen wird die Abdeckleiste 15 parallel zur Reihe der Kühlluftaustrittsöffnungen 14 von der Abströmkante 8 her so aufgeschoben, dass die Haltedorne 16, 17, 18 in die vorgesehenen Kühlluftaustrittsöffnungen 14 einfahren. In der eingesteckten Endstellung überdeckt die Abdeckleiste 15 die Kühlluftaustrittsöffnungen 14 vollständig mit einem beidseitigen Überstand von maximal 3 mm.

Mit der so aufgesteckten Abdeckleiste 15 kann die Beschichtung mittels der vorbeschriebenen Verfahren durchgeführt werden. Dabei kann die Abdeckwirkung noch dadurch unterstützt werden, dass über die Lufteintrittsöffnungen im Schaufelfuß 6 Druckluft eingeführt wird, die dann an den Kühlluftaustrittsöffnungen 14 und über eventuell vorhandene Spalte zwischen der Oberfläche des Schaufelblatts 4 und der Abdeckleiste 15 austritt.

Die Abdeckleiste 15 ist wiederverwendbar. Da die Abdeckleiste 15 und auch die Haltedorne 16, 17, 18 plastisch verformt werden können, kann die Abdeckleiste 15 in gewissen Grenzen an unterschiedliche Laufschaufeln 1 angepasst werden. Nach einer gewissen Anzahl von Einsätzen wird die Abdeckleiste 15 durch Schaben oder Strahlen von der sich gebildeten Beschichtung befreit.

Statt der Beaufschlagung der Hohlräume 9, 10, 11 mit Druckluft kann vorgesehen sein, dass die Kühlluftaustrittsöffnungen 14 vor Aufstecken der Abdeckleiste 15 mit einem Klebeband vollständig und abdichtend abgedeckt werden. Beim Aufstecken der Abdeckleiste 15 durchstechen die Haltedorne 16, 17, 18 das Klebeband, erforderlichenfalls durch vorheriges Vorsehen von Einschnitten. In der vollständig eingesteckten Stellung deckt die Abdeckleiste 15 das Klebeband vollständig ab und schützt es auf diese Weise vor zu hoher Wärmeeinwirkung während des Beschichtungsvorgangs.

## Patentansprüche

1. Verfahren zur Herstellung von Turbinenbauteilen (1) mit wenigstens einem Umströmungskörper (4), der im Bereich seiner Abströmkante (8) angeordnete Kühlluftaustrittsöffnungen (14) aufweist,
wobei der Umströmungskörper (4) mit einer insbesondere keramischen Beschichtung durch Sprühbeschichten versehen wird,
**dadurch gekennzeichnet, dass**
die Kühlluftaustrittöffnungen (14) vor dem Aufbringen der Beschichtung mit einer Abdeckleiste (15) vollständig abgedeckt werden, die aus einem Material besteht, das beim Beschichtungsvorgang beständig ist.

2. Verfahren nach Anspruch 1,
**dadurch gekennzeichnet, dass**
eine Abdeckleiste (15) aus Metall, insbesondere aus Stahl, verwendet wird.

3. Verfahren nach Anspruch 1 oder 2,
**dadurch gekennzeichnet, dass**
eine Abdeckleiste (15) verwendet wird, die in die Kühlluftaustrittsöffnungen (14) passende Vorsprünge (16, 17, 18) aufweist, und
dass die Abdeckleiste (15) unter Einstecken der Vorsprünge (16, 17, 18) in die Kühlluftaustrittsöffnungen (14) auf das Schaufelblatt (4) aufgesteckt wird.

4. Verfahren nach Anspruch 2 und 3,
**dadurch gekennzeichnet, dass**
die Vorsprünge (16, 17, 18) von Hand plastisch biegsam sind.

5. Verfahren nach einem der Ansprüche 1 bis 4,
**dadurch gekennzeichnet, dass**
der Umströmungskörper (4) während des Beschichtungsvorgangs derart mit einem Gas, insbesondere Druckluft, beaufschlagt wird, dass das Gas aus den Kühlluftaustrittsöffnungen (14) ausströmt.

6. Verfahren nach Anspruch 5,
**dadurch gekennzeichnet, dass**
eine solche Abdeckleiste (15) verwendet wird, dass das Klebeband nach dem Aufsetzen der Abdeckleiste (15) vollständig abgedeckt wird.

7. Verfahren nach Anspruch 5 oder 6,
**dadurch gekennzeichnet, dass**
die Vorsprünge (16, 17, 18) das Klebeband beim Aufstecken des Abdeckblechs (15) durchstechen.

8. Verfahren nach Anspruch 7,
**dadurch gekennzeichnet, dass**
in das Klebeband an den Stellen, an denen es von den Vorsprüngen (16, 17, 18) durchstochen werden soll, mit Einschnitten versehen wird.

9. Verfahren nach einem der Ansprüche 1 bis 9,
**dadurch gekennzeichnet, dass**
nach dem Beschichtungsvorgang eventuell in die Kühlluftaustrittsöffnungen (14) eingedrungenes Beschichtungsmaterial mittels Sandstrahlen entfernt wird.

10. Verfahren nach Anspruch 9,
**dadurch gekennzeichnet, dass**
die Beschichtung beim Sandstrahlen in einem an die Kühlluftaustrittsöffnungen (14) angrenzenden Bereich abgedeckt wird.

## Geänderte Patentansprüche

### Geänderte Patentansprüche gemäss Regel 86(2) EPÜ.

**1.** Verfahren zur Herstellung von Turbinenbauteilen (1) mit wenigstens einem Umströmungskörper (4), der im Bereich seiner Abströmkante (8) angeordnete Kühlluftaustrittsöffnungen (14) aufweist,
wobei der Umströmungskörper (4) mit einer insbesondere keramischen Beschichtung durch Sprühbeschichten versehen wird,
**dadurch gekennzeichnet, dass**
die Kühlluftaustrittsöffnungen (14) vor dem Aufbringen der Beschichtung mit einem Klebband abgedeckt werden und nach der Abdeckung mit dem Klebeband eine Abdeckleiste (15) angebracht wird,
die die Kühlluftaustrittsöffnungen (14) vollständig abdeckt,
wobei die Abdeckleiste (15) aus einem Material besteht, das beim Beschichtungsvorgang beständig ist.

**2.** Verfahren nach Anspruch 1,
**dadurch gekennzeichnet, dass**
eine Abdeckleiste (15) aus Metall, insbesondere aus Stahl, verwendet wird.

**3.** Verfahren nach Anspruch 1 oder 2,
**dadurch gekennzeichnet, dass**
eine Abdeckleiste (15) verwendet wird, die in die Kühlluftaustrittsöffnungen (14) passende Vorsprünge (16, 17, 18) aufweist, und
dass die Abdeckleiste (15) unter Einstecken der Vorsprünge (16, 17, 18) in die Kühlluftaustrittsöffnungen (14) auf das Schaufelblatt (4) aufgesteckt wird.

**4.** Verfahren nach Anspruch 2 und 3,
**dadurch gekennzeichnet, dass**
die Vorsprünge (16, 17, 18) von Hand plastisch biegsam sind.

**5.** Verfahren nach einem der Ansprüche 1 bis 4,
**dadurch gekennzeichnet, dass**
der Umströmungskörper (4) während des Beschichtungsvorgangs derart mit einem Gas, insbesondere Druckluft, beaufschlagt wird, dass das Gas aus den Kühlluftaustrittsöffnungen (14) ausströmt.

**6.** Verfahren nach Anspruch 5,
**dadurch gekennzeichnet, dass**
eine solche Abdeckleiste (15) verwendet wird, dass das Klebeband nach dem Aufsetzen der Abdeckleiste (15) vollständig abgedeckt wird.

**7.** Verfahren nach Anspruch 5 oder 6,
**dadurch gekennzeichnet, dass**
die Vorsprünge (16, 17, 18) das Klebeband beim Aufstecken des Abdeckblechs (15) durchstechen.

**8.** Verfahren nach Anspruch 7,
**dadurch gekennzeichnet, dass**
in das Klebeband an den Stellen, an denen es von den Vorsprüngen (16, 17, 18) durchstochen werden soll, mit Einschnitten versehen wird.

**9.** Verfahren nach einem der Ansprüche 1 bis 9,
**dadurch gekennzeichnet, dass**
nach dem Beschichtungsvorgang eventuell in die Kühlluftaustrittsöffnungen (14) eingedrungenes Beschichtungsmaterial mittels Sandstrahlen entfernt wird.

**10.** Verfahren nach Anspruch 9,
**dadurch gekennzeichnet, dass**
die Beschichtung beim Sandstrahlen in einem an die Kühlluftaustrittsöffnungen (14) angrenzenden Bereich abgedeckt wird.
